# EUROPEAN PATENT SPECIFICATION

(11) **EP 3 947 318 B1**
(45) Date of publication and mention of the grant of the patent: **03.05.2023**
(21) Application number: 20732337.9
(22) Date of filing: 02.04.2020
(51) Int. Cl.: C04B 28/26, C04B 111/28

(54) **THERMAL INSULATION MATERIAL AND METHOD OF APPLICATION THEREOF**
WÄRMEDÄMMMATERIAL UND ANWENDUNGSVERFAHREN DAFÜR
MATÉRIAU D'ISOLATION THERMIQUE ET SON PROCÉDÉ D'APPLICATION

(30) Priority: 05.04.2019 TR 201905135
(43) Date of publication of application: 09.02.2022
(73) Proprietor: Turkiye Petrol Rafinerileri Anonim Sirketi Tupras, 41780 Kocaeli (TR)
(72) Inventor: ACIKSARI, Cem, 41790 Kocaeli (TR); OGUS, Erhan, 41780 Korfez/Kocaeli (TR); CELEBI, Serdar, 41790 Korfez/Kocaeli (TR); TEKE, Yesim, Sisli/Istanbul (TR); KARAKAYA, Cuneyt, 41780 Korfez/Kocaeli (TR); TURAN, Servet, Tepebasi/ Eskisehir (TR); TATLISU, Giyasettin Can, Tepebasi/Eskisehir (TR)
(74) Representative: Cayli, Hülya
(86) International application number: PCT/TR2020/050262
(87) International publication number: WO 2020/204865

(56) References cited:
- EP-A1- 2 868 638
- EP-A1- 3 109 217
- EP-A2- 0 352 246
- WO-A1-2008/116188
- WO-A1-2014/141051
- WO-A1-2017/174560
- WO-A2-97/25291
- DE-A1- 10 205 728
- DE-U1- 29 600 466
- GB-A- 1 583 308
- US-A- 5 352 288
- US-A1- 2005 031 843
- US-A1- 2016 023 951
- US-A1- 2017 240 470
- US-A1- 2018 148 376

## Description

### TECHNICAL FIELD OF THE INVENTION

The present invention relates to a thermal insulation material comprising ceramic based inorganic aluminum silicate source such as; fly ash, clay based material, and/or inorganic additives. The present invention relates also to use of this thermal insulation material.

### BACKGROUND OF THE INVENTION

Increasing energy efficiency or energy conservation is one of the most important subjects all around the world and there has been many subjects working on it. In the world, the local energy sources about to exhaust and the conservation of energy is becoming more important.

There are many motivations to increase energy efficiency. The most promising starting point is that, reducing energy use reduces energy costs and can lead to financial cost savings for consumers and industrial processes. Energy saving can reduce the world's energy need and helps to protect the environment besides cost saving.

Industry is one of the most energy needed area in the world. Increasing energy efficiency in industrial processes can reduce the energy need in subsequent processes, helps cost saving and also gives less damage to the environment.

Thermal insulation is very important to save energy in industrial application and equipments.

Thermal insulation is a great solution to reduce energy consumption by preventing heat loss through the industrial equipment used mainly in energy sector. When thinking about efficiency of used industrial equipments and processes, the first strategy to apply should be saving energy. Heat or thermal insulation helps reduction of unwanted temperature changes and decreases the energy demand of heating and cooling systems.

In industry, especially in refineries, traditional insulation materials such as glass or rock wool are generally used to prevent heat losses as thermal insulation material. Such materials can only be applied to flat surfaces due to their thick and inelastic structure. For this reason, it is not possible to provide thermal insulation of equipment with recessed surfaces. There are many equipments having recessed surfaces in refineries such as; connection equipment, heat exchanger heads, flange, valve, cover or manifold need to be opened and closed for continuous maintenance or control. However, some of the conventional materials are not suitable for being used at high temperatures in refineries.

As another option, organic based materials, such as; polyurethane foam, polystyrene board, phenolic foam and so on, were used to be as thermal insulation materials but, the disadvantages of their organic nature, such as flammability or lability, increased the need of inorganic type materials.

Inorganic thermal insulation materials generally include glass wool, rock wool, expansion perlite, micro nano insulation board and so on. These inorganic materials have some advantages compared to organic ones such as; excellent fire resistance, high strength, durability.

US2018/0148376A1 patent application discloses a thermally insulating material formed of ceramic oxide and inorganic binding agent. The insulating material is treated up to 1000°C in the production process. There is a very long list of application area of the invention but the application of the material is suitable especially for buildings and construction materials. Moreover, it does not show any specific examples of application on metal surfaces.

Another patent document no. WO2017174560A1 discloses a method for producing a geopolymer foam. Said method comprises providing a foamable formulation, foaming the formulation, and allowing the foamed formulation to harden. The foamable formulation comprises at least one inorganic binder selected from the group consisting of latent hydraulic binders, pozzolanic binders and mixtures thereof; at least one alkaline activator selected from the group consisting of alkali metal hydroxides, alkali metal carbonates, alkali metal aluminates, alkali metal silicates and mixtures thereof; at least one surfactant; nanocellulose and water.

Another patent document no. WO2014141051A1 discloses a high-strength geopolymer composite cellular concrete. Said geopolymer composite cellular concrete comprises a composite binder, wherein said composite binder comprises one or more Class F fly ash materials, one or more gelation enhancers, and one or more hardening enhancers, wherein each of the one or more Class F fly ash materials comprises 15 wt.% or less calcium oxide.

Accordingly, there is a need for heat/thermal insulation material applicable for surface coating of industrial system equipment in energy industry, especially in refineries wherein the material is efficient to apply different surfaces and have decreased thermal conductivity.

### OBJECT OF THE INVENTION

The present invention overcomes the problems mentioned above and provides an inexpensive and easy to use form of thermal insulation material having porous structured ceramic formulation.

The present invention provides also the uses of this thermal insulation material.

### FIELD OF THE INVENTION

The present invention provides a thermal insulation material comprising a solid phase which comprises 30 - 90 wt % aluminum silicate source (Al and Si source), based on the total weight of the thermal insulation material; a liquid phase which comprises an alkaline solution; and 1 - 30 wt % (preferably 1 - 20 wt %) hollow inorganic material particles, based on the total weight of the thermal insulation material. The present invention preferably comprises additives.

The present disclosure also relates to the production process of the thermal insulation material and the application process of the material on surfaces.

The obtained thermal insulation material has very low heat conductivity, such as lower than 0.1 W/m.K. The material has high resistance to corrosion and other environmental side effects, as well. The material can be classified in A class non inflammable materials as having fireproof property. Moreover, the present invention provides a thermal insulating material applicable at temperatures T< 900°C, more preferably T<500°C with a low thermal conductivity.

In addition to all these technical advantages, the material has a feature that can easily applied to all kinds of surfaces and no cracks occur on the surface during the drying phase after application.

In the present invention, ceramic based, slurry and/or powder formed thermal insulation material is obtained. More preferably, powder formed thermal insulation material is formed. The production process is based on the geopolymerization reaction of a solid phase which comprises inorganic aluminum silicate source (Al and/or Si source) and a liquid phase which comprises an alkaline solution followed by addition of hollow inorganic compounds and other suitable additives to the reaction medium.

Geopolymers are fully inorganic class of alumino-silicate-based ceramics balanced by group I oxides. Geopolymers are composed of a polymeric Si-O-Al framework similar to zeolites. The main difference of geopolymers is being in amorphous phase. These are hard gels, which then can be converted into crystal or glass-ceramic materials. Geopolymer's structure contains small aluminosilicate clusters with pores dispersed in a highly porous network. The main advantages of the geoploymerization reaction for the present invention are being as amorphous phase and having porous network to be filled and/or covered by hollow inorganic compounds.

Geopolymers are usually obtained by chemical activation of industrial solid wastes and/or natural minerals such as; fly ash or slag, clay based material or kaolin or vermiculite.

In the present invention, geopolymerization reaction is used because the polymer structure has highly porous structure and contains small aluminosilicate clusters with pores dispersed in a highly porous network. It is very important to obtain the maximum air foam in the geopolymerization reaction of the present invention because the pores formed are suitable for using inorganic hollow materials to fill the pores.

In the present invention, the geopolymer reaction comprises; fly ash, slag, kaolin, vermiculite and/or clay and a liquid phase which comprises an alkaline solution.

In one embodiment of the invention, the fly ash, slag, kaolin, vermiculite and/or clay based material is used as Al and Si source of the thermal insulating material. Ceramic oxide based thermal insulation materials have been used for years.

In the present invention, ceramic is chosen as the raw material due to its lightweight, stability at high temperatures, resistance to thermal shock and broad range of thermal capabilities and physical characteristics to be used in equipment in heat transfer applications in industry, especially in refineries.

In one embodiment, the solid phase comprised in the thermal insulating material comprises fly ash obtained from industrial solid wastes.

In one embodiment of the present invention, the fly ash is obtained from Thermal Power Plant wastes in Turkey, and is sieved from a sieve having from 25 to 74 micrometres (µm) size to remove the impurities and classify the particle size of the fly ash.

In one embodiment, the thermal insulating material comprises 5 - 63 wt. % fly ash having mean particle size of preferably less than 63 µm.

In one embodiment of the present invention, the thermal insulating material may comprise preferably 18 to about 48 wt % fly ash based on the total weight of the thermal insulation material.

In one embodiment of the invention, the thermal insulating material further comprises clay based material that is commercially available.

In one embodiment, the thermal insulating material comprises 1-50 wt. % (preferably 1 to 40 wt. % ) clay based material based on the total weight of the thermal insulation material.

In some embodiments of the present invention, the clay based material may be a kaolinite, vermiculite, perlit, halloysite, illite, smectite, muscovite, bentonite and attapulgite or any combination thereof. The clay based material may be a commercially available kaolinite clay, stoneware or fire clay.

In one embodiment of the present invention kaolin can be preferred as clay based material.

In another embodiment of the present invention, kaolin can be converted to metakaolin under 700-800 ° C prior to use. Metakaolin can be chosen as Al/Si source, wherein the Al ratio is higher than Si ratio which should be used as Al³⁺ cation source, which is required for the geopolymerization reaction.

In some embodiments, the clay based material may be treated prior to use. The clay based material may be treated by heating to about 900°C, or about 800°C, or about 700°C prior to use to remove the excess water in the clay based material. By the way, the water has been removed before crystallization. It is very important to keep the clay based material in amorphous form to be solved in slurry mixture of the reaction medium.

In one embodiment of the present invention, the thermal insulation material further comprises ceramic oxide. In accordance with the application field and desired characteristics, inorganic hollow materials can be used as ceramic oxide comprising; ceramic, glass microspheres, aluminate and/or silicate, and preferably, glass hollow microsphere particles can be used.

In one embodiment, the thermal insulating material comprises 1 - 30 wt % hollow inorganic material based on the total weight of the thermal insulating material, preferably 1- 20 wt % hollow inorganic material.

In one embodiment of the present invention, the hollow inorganic material may have a mean particle size of less than 120 micrometer (µm). The mean particle size may vary from 5 to 120 µm.

The particle size of the hollow inorganic materials are suitable for application of the thermal insulation material with spray coating on any kind of surfaces, preferably hot surfaces.

The ceramic oxide based hollow inorganic material used in the reaction medium decreases thermal conductivity up to values lower than 0.1 W/m.K, that is crucial for the invention.

In some embodiments, the liquid phase of the thermal insulating material further comprises a binding agent. In one embodiment of the present invention, potassium silicate and/or sodium silicate can be used as a liquid phase of the thermal insulation material.

In one embodiment of the present invention, sodium silicate solution in water (Na2O:SiO2) is used preferably as an alkaline solvent having a pH of higher than 10. It has been chosen for having superior features such as; increasing the reaction rate and also increasing the rate of binding of the hollow inorganic materials in the reaction medium.

In some embodiments, the liquid phase of the thermal insulation material further comprises further additives to be used in the reaction medium such as; water, NaOH and/or KOH. These additives are used to control pH and reaction rate and also used as a solvent in the reaction medium.

In some embodiments, the thermal insulating material further comprises other additives. The additives may be selected from the group consisting of a colorant, fibers, dispersants, surfactants, stearate lubricants or any combination thereof.

In second aspect, which is not covered by the present invention, there is a process provided for producing a thermally insulating product comprising preparing two different composition parts to be combined prior to use. One part of the composition is the solid phase comprising fly ash and clay based material and the other part of the composition is the liquid phase comprising sodium and/or potassium silicate, NaOH, KOH and/or water. In one embodiment of the present invention, the composition further comprises inorganic hollow materials.

In one embodiment, which is not covered by the present invention, the solid phase of the composition comprises 5 - 63 wt. % fly ash, 1-50 wt. % metakaolin based on the total weight of the thermal insulating material. Preferably, the solid phase of the composition is prepared by mixing fly ash and metakaolin as a first mixture. The hollow particles are added into the reaction medium at last, after combining solid and liquid phases. In one embodiment of the present invention, the composition further comprises 1-30 wt. % inorganic material.

In one embodiment, which is not covered by the present invention, the liquid phase of the composition comprises 6 - 56 wt. % sodium silicate, 1-20 wt. % NaOH, 5-55 wt. % H₂O. The liquid phase of the composition is prepared by dissolving NaOH in water and admixed with sodium silicate solution as the second mixture.

After combining first and second mixture, the hollow particles are added into the reaction medium to avoid damaging of the hollow inorganic materials.

In a third aspect, which is not covered by the present invention, there is provided a thermally insulating product produced by the process of the second aspect.

Any example below is solely for providing a context for the present invention and understanding the invention clearly; not for limiting the scope just with the examples.

The composition of the thermal insulation material and also the production process of the material are disclosed in examples with further details below.

### EXAMPLES

### Example 1: A Composition of the Thermal Insulation Material

In accordance with the first aspect of the present invention; the thermal insulation material comprises;

| **Solid Phase Content** | % by weight |
|---|---|
| Fly ash | 43-48 |
| Metakaolin | 8-12 |

| **Liquid Phase Content** | |
|---|---|
| Sodium Silicate | 29-33 |
| NaOH | 5-10 |
| Water | 5-10 |
| **Total** | 100 |

In the present example, there are no hollow particles used in the thermal insulation material composition, which can be used as a reference example.

### Example 2: A Composition of the Thermal Insulation Material

In accordance with the first aspect of the present invention; the thermal insulation material comprises;

| **Solid Phase Content** | % by weight |
|---|---|
| Fly ash | 18-23 |
| Metakaolin | 8-12 |
| Hollow Inorganic Particles | 9-12 |

| **Liquid Phase Content** | |
|---|---|
| Sodium Silicate | 42-46 |
| NaOH | 2-5 |
| Water | 10-15 |
| **Total** | 100 |

In the present example, hollow inorganic material has been used about 10 wt. %

### Example 3: A Composition of the Thermal Insulation Material

In accordance with the first aspect of the present invention; the thermal insulation material comprises;

| **Solid Phase Content** | % by weight |
|---|---|
| Fly ash | 26-32 |
| Metakaolin | 5-8 |
| Hollow Inorganic Particles | 18-20 |

| **Liquid Phase Content** | |
|---|---|
| Sodium Silicate | 24-26 |
| NaOH | 5-8 |
| Water | 12-15 |
| **Total** | 100 |

### Example 4: A Composition of the Thermal Insulation Material

In accordance with the first aspect of the present invention; the thermal insulation material comprises;

| **Solid Phase Content** | % by weight |
|---|---|
| Fly ash | 32-36 |
| Metakaolin | 8-12 |
| Hollow Inorganic Particles | 18-20 |

| **Liquid Phase Content** | |
|---|---|
| Sodium Silicate | 9-16 |
| Water | 35-40 |
| **Total** | 100 |

### Example 5: A Composition of the Thermal Insulation Material;

In accordance with the first aspect of the present invention; the thermal insulation material comprises;

| **Solid Phase Content** | % by weight |
|---|---|
| Fly ash | 20 |
| Metakaolin | 9 |
| glass microspheres | 10 |

| **Liquid Phase Content** | |
|---|---|
| Sodium Silicate | 44 |
| NaOH | 2 |
| Water | 15 |
| **Total** | 100 |

**Table 1. Test Results of Examples**

| | **Example 1** | **Example 2** | **Example 3** | **Example 4** | **Example 5** |
|---|---|---|---|---|---|
| Thermal Conductivity (W/mK) | 0.90 | 0.05 | 0.04 | 0.06 | 0.05 |
| Adhesion on Metal Surface | Very good | Very good | poor | good | Very good |

### Results and Evaluation of Thermal Conductivity and Surface Adhesion Capacity

According to the examples given below and thermal conductivity results; it is seen that Example 2, 3, 4 and 5 has very low thermal conductivity which is below 0.1 W/mK. Example 1 is given as a reference material composition without hollow inorganic material. It is clear from the examples and the results shown in Table 1 that using hollow inorganic particles significantly decreases the thermal conductivity of the material.

Additionally, in Example 1 wherein the hollow inorganic material is not added into the composition, adhesion on metal surface is very good but the thermal conductivity is very high, which is nearly 1 W/mK, thereby making the composition useless according to present invention. Comparing the other Examples 2, 3 and 4 with each other and also with Example 1; by adding hollow inorganic material to the composition, it is seen that the thermal conductivity has decreased significantly, but in Example 3 and 4, the adhesion to the metal surface has deteriorated. The improvement of the adhesion to provide k <0.1 W / mK is achieved by increasing the alkali solvent sodium silicate in the composition.

It is seen that a high amount of hollow particles has a negative effect on the material adhesion properties. The fact that the surfaces of the hollow particles added to the composition cannot be completely covered is thought to have a negative effect on the mechanical properties of the material due to both the breaking of the particles and the lack of the binding phase. Hence, the amount of hollow particles within the composition should be optimal, such as between 9 - 12 % wt, as can be seen from Example 2.

The ratio of fly ash / metakaolin is found to be useful in Examples 2, 3, 4 and 5.

As a result of the observations, the example 5 is chosen to provide maximum benefit in terms of low cost and thermal conductivity which is below 0.1 W/mK and also provides maximum adhesion on metal surface.

It is seen that, if the amount of fly ash in the material is used above 50 % wt, the geopolymerization reaction is not fully occurred/completed in the expected range, although the Si / Al ratio required for the geopolymerization reaction is achieved. In this case, the insoluble crystalline phase in the heat insulation slurry will be more than the reaction product amorphous phase. As a result, the grains are not bonded to one another and the adhesion strength of the coating material is reduced.

Additionally, if the metakaolin is used by an amount over 50 % wt, the Si / Al ratio required for the geopolymerization reaction will decrease and the geopolymer reaction will not be fully occurred/completed. The Sialat structure formed in geopolymerization reactions will not occur and the binding phase will not be stable.

Moreover, Sodium silicate and NaOH used in geopolymer sludge provide the required alkaline medium for geopolymerization. The alkaline medium is one of the most important parameters for the realization of geopolymerization. Additionally, water forms the reaction medium for geopolymerization reactions and also affects the flow of the sludge. H2O produces suitable conditions for producing a homogeneously distributed pore connected to each other by producing O2 in the reaction medium.

Hollow inorganic particles are well distributed within the composition and the grain size is larger. It is thought that the surfaces of the glass spheres are not fully coated and the reason for this is the high sodium silicate and the liquid ratio of the alkali solvent phase in the composition.

In addition, the determination of the amount of NaOH used is also very important because the use of large amounts of NaOH leads to the dissolution of inorganic materials in solution.

In addition to its use as an alkaline solvent, Na₂SiO₃ provides a metal-to-thermal insulation material interface for the coating of metal with the desired temperature (300°C etc.), thus increasing the adhesion strength.

The production method of the thermal insulation material is disclosed in examples with further details below.

### Example 5: Production and Application of the Thermal Insulation Material

In second aspect not covered by the present invention, the thermal insulation material is prepared by a process that combines solid and liquid phases by following the steps below;
Solid phase is prepared as the first mixture;
Fly ash is sieved from 63 micrometres (µm) size sieve,
Fly ash and metakaolin are dry mixed for 30 minutes.
Liquid phase is prepared as the second mixture;
NaOH particles are dissolved in water completely,
Dissolved solution is added slowly into sodium silicate solution in water and alkaline solution having pH:10-12 is formed
Water is added into the prepared alkaline solution and mixed for 30 min.

Prepared solid mixture is added into the liquid mixture slowly and mixed for nearly 15 min. and a fluidal slurry mixture is obtained

Finally, the hollow inorganic particles are added into the slurry mixture and mixed for 15 min. further.

The prepared thermal insulation material is ready for spraying to hot and/or cold surfaces then it is followed by curing the thermal insulation material on surface.

There is provided an application method for improving the heat resistance of an article comprising at least partially coating the article with the thermally insulating material according to the first aspect.

The thermal insulation material developed according to the invention is suitable for use as a material to be sprayed or moulded on the surface by applying the material by spraying method. Accordingly, said thermal insulation material is used for spray-applying it on a surface.

In one embodiment of the present invention, the thermal insulation material in powder form is mixed with water or other suitable solvents prior to use to form a slurry mixture to be applied with spraying.

In one embodiment of the present invention, the thermal insulation material in powder form is mixed with water or other suitable solvents and then shaped specifically by using moulds for particular end-uses.

In one embodiment of the present invention, the surfaces to be treated should be free of water and other contaminations before application of the thermal insulation material

In one aspect of the present invention, the thermal insulation material applied on the surfaces has a thickness between 1-20mm.

In one embodiment of the present invention, the thermal insulation material applied on the surfaces has a thickness preferably between 1-10mm.

In another embodiment of the present invention, the surface temperature is decreased much more if the coating thickness is between 1 to 10 mm.

In one embodiment of the present invention, the curing period after the thermal insulation material is applied to the surface varies according to the surface temperature and it takes between 1-24 hours on average, preferably 18-20 hours.

The invented insulation material can be applied to different metal surfaces regardless of whether the surface is smooth or not. The thermal insulation material applied metal surfaces will finally have high temperature resistance (T> 300°C) and low thermal conductivity coefficient (k <0.1 W / mK). In the field of the present invention, the surface temperature of a metal equipment is decreased from 250-300°C to 60-70°C.

In the present invention, the produced thermal (heat) insulation material can be used for fire and heat resistant coatings and adhesives, high temperature ceramics, new binders for fire-resistant fiber composites.

The powder based thermal insulation material of the present invention is preferably applied to metal surfaces such as furnaces, heaters, incinerator, hot pipes in industry and especially in refineries.

The thermal insulation material of the present invention is provided with a powder-based material form to provide thermal insulation for the equipment, preferably by coating with a spray method.

In one aspect of the present invention, the thermal insulation material is provided for use in especially refineries to prevent heat loss on the heat transfer surfaces of the refinery equipments.

## Claims

1. A thermal insulation material comprising;
- a solid phase which comprises 30 - 90 wt % aluminum silicate source based on the total weight of the thermal insulation material;
- a liquid phase which comprises an alkaline solution; and
- 1 - 30 wt % hollow inorganic material particles based on the total weight of the thermal insulation material.

2. A thermal insulation material according to claim 1, comprising 1-20% of hollow inorganic material particles based on the total weight of the thermal insulation material.

3. A thermal insulation material according to claim 1, wherein the hollow inorganic particles are coated with the aluminum silicate source in the reaction medium.

4. A thermal insulation material according to claim 1, wherein aluminum silicate source is selected from fly ash, slag, kaolin, vermiculite clay based material and/or combinations thereof.

5. A thermal insulation material according to claim 1, wherein aluminum silicate source is fly ash and/or clay based material.

6. A thermal insulation material according to claim 5, wherein the clay based material comprises kaolin.

7. A thermal insulation material according to claim 1, wherein the liquid phase further comprises potassium silicate, sodium silicate, NaOH, KOH and/or combinations thereof.

8. A thermal insulation material according to claim 1, wherein the hollow inorganic material comprises ceramic microspheres, glass microspheres and/or combinations thereof.

9. A thermal insulation material according to claim 1, wherein the hollow inorganic material comprises glass microspheres.

10. A thermal insulation material according to claim 1, wherein the thermal insulation material is in slurry form.

11. A thermal insulation material according to any of the preceding claims, the material comprising;
- 5-63 wt. % fly ash,
- 1-50 wt. % kaolin
- 1-30 wt. % hollow inorganic particles
- 6 - 56 wt. % sodium silicate
- 1-20 wt. % NaOH and
- 5-55 wt. % Water,
wherein weight percentages are based on the total weight of the thermal insulation material.

12. A thermal insulation material according to any of the preceding claims, the material comprising;
- 18- 48 wt. % fly ash,
- 1-40 wt. % kaolin
- 1-20 wt. % hollow inorganic particles
- 10 - 50 wt. % sodium silicate
- 1-20 wt. % NaOH and
- 5-40 wt. % Water,
wherein weight percentages are based on the total weight of the thermal insulation material.

13. A thermal insulation material according to any of the preceding claims, the material comprising;
- 18- 23 wt. % fly ash,
- 8 - 12 wt. % metakaolin
- 9 - 12 wt. % hollow inorganic particles
- 42 - 46 wt. % sodium silicate
- 2 - 5 wt. % NaOH and
- 10 - 15 wt. % Water,
wherein weight percentages are based on the total weight of the thermal insulation material.

14. Use of a thermal insulation material according to claim 10 for spray-applying it on a surface.

15. Use of a thermal insulation material according claims 1 to 13 for coating the industrial equipment in applying to metal surfaces such as furnaces, heaters, incinerator, hot pipes in industry and especially in refineries.

## Patentansprüche

1. Wärmeisolationsmaterial mit:
- einer festen Phase, die 30 - 90 Gew.-% einer Quelle für Aluminiumsilikat in Bezug auf das Gesamtgewicht des Wärmeisolationsmaterials aufweist,
- einer flüssigen Phase, die eine alkalische Lösung aufweist, und
- 1 - 30 Gew.-% Hohlpartikel aus anorganischem Material in Bezug auf das Gesamtgewicht des Wärmeisolationsmaterials.

2. Wärmeisolationsmaterial nach Anspruch 1, mit 1-20 Gew.-% Hohlpartikeln aus anorganischem Material in Bezug auf das Gesamtwicht des Wärmeisolationsmaterials.

3. Wärmeisolationsmaterial nach Anspruch 1, wobei die anorganischen Hohlpartikel im Reaktionsmedium mit der Quelle für Aluminiumsilikat beschichtet sind.

4. Wärmeisolationsmaterial nach Anspruch 1, wobei die Quelle für Aluminiumsilikat ausgewählt ist aus Flugasche, Schlacke, Kaolin, Material auf Basis von Vermiculit und/oder Kombinationen daraus.

5. Wärmeisolationsmaterial nach Anspruch 1, wobei die Quelle für Aluminiumsilikat Flugasche und/oder Material auf Tonbasis ist.

6. Wärmeisolationsmaterial nach Anspruch 5, wobei das Material auf Tonbasis Kaolin aufweist.

7. Wärmeisolationsmaterial nach Anspruch 1, wobei die flüssige Phase ferner Kaliumsilikat, Natriumsilikat, NaOH, KOH, und/oder Kombinationen daraus aufweist.

8. Wärmeisolationsmaterial nach Anspruch 1, wobei die anorganischen Hohlpartikel keramische Mikrokügelchen, Glasmikrokügelchen und/oder Kombinationen davon aufweist.

9. Wärmeisolationsmaterial nach Anspruch 1, wobei die anorganischen Hohlpartikel Glasmikrokügelchen aufweisen.

10. Wärmeisolationsmaterial nach Anspruch 1, wobei das Wärmeisolationsmaterial die Form einer Aufschlämmung hat.

11. Wärmeisolationsmaterial nach einem der vorhergehenden Ansprüche, wobei das Material aufweist:
- 5-63 Gew.-% Flugasche,
- 1-50 Gew.-% Kaolin,
- 1-30 Gew.-% anorganische Hohlpartikel,
- 6-56 Gew.-% Natriumsilikat,
- 1-20 Gew.-% NaOH und
- 5-55 Gew.-% Wasser,
wobei die Gewichtsprozentangaben sich auf das Gesamtgewicht des Wärmeisolationsmaterials beziehen.

12. Wärmeisolationsmaterial nach einem der vorhergehenden Ansprüche, wobei das Material aufweist:
- 18-48 Gew.-% Flugasche,
- 1-40 Gew.-% Kaolin,
- 1-20 Gew.-% anorganische Hohlpartikel,
- 10-50 Gew.-% Natriumsilikat,
- 1-20 Gew.-% NaOH und
- 5-40 Gew.% Wasser,
wobei die Gewichtsprozentangaben sich auf das Gesamtgewicht des Wärmeisolationsmaterials beziehen.

13. Wärmeisolationsmaterial nach einem der vorhergehenden Ansprüche, wobei das Material aufweist:
- 18-23 Gew.-% Flugasche,
- 8-12 Gew.-% Metakaolin,
- 9-12 Gew.-% anorganische Hohlpartikel,
- 42-46 Gew.-% Natriumsilikat,
- 2-5 Gew.-% NaOH und
- 10-15 Gew.% Wasser,
wobei die Gewichtsprozentangaben sich auf das Gesamtgewicht des Wärmeisolationsmaterials beziehen.

14. Verwendung eines Wärmeisolationsmaterials nach Anspruch 10 zum Sprühauftragen auf eine Oberfläche.

15. Verwendung eines Wärmeisolationsmaterials nach Ansprüchen 1 bis 13 zum Beschichten von Industrieausrüstungen beim Aufbringen auf Metalloberflächen, wie etwa auf Öfen, Heizungen, Verbrennungsöfen, heiße Rohre in Industrieanlagen und insbesondere in Raffinerien.

## Revendications

1. Matériau d'isolation thermique comprenant ;
- une phase solide qui comprend 30-90 % en poids d'une source de silicate d'aluminium sur la base du poids total du matériau d'isolation thermique ;
- une phase liquide qui comprend une solution alcaline ; et
- 1-30 % en poids de particules de matériau inorganique creux sur la base du poids total du matériau d'isolation thermique.

2. Matériau d'isolation thermique selon la revendication 1, comprenant 1-20 % de particules de matériau inorganique creux sur la base du poids total du matériau d'isolation thermique.

3. Matériau d'isolation thermique selon la revendication 1, dans lequel les particules inorganiques creuses sont revêtues de la source de silicate d'aluminium dans le milieu réactionnel.

4. Matériau d'isolation thermique selon la revendication 1, dans lequel la source de silicate d'aluminium est sélectionnée parmi un matériau à base de cendres volantes, de scories, de kaolin, de vermiculite-argile et/ou des combinaisons de ceux-ci.

5. Matériau d'isolation thermique selon la revendication 1, dans lequel la source de silicate d'aluminium est un matériau à base de cendres volantes et/ou d'argile.

6. Matériau d'isolation thermique selon la revendication 5, dans lequel le matériau à base d'argile comprend du kaolin.

7. Matériau d'isolation thermique selon la revendication 1, dans lequel la phase liquide comprend en outre du silicate de potassium, du silicate de sodium, du NaOH, du KOH et/ou des combinaisons de ceux-ci.

8. Matériau d'isolation thermique selon la revendication 1, dans lequel le matériau inorganique creux comprend des microsphères de céramique, des microsphères de verre et/ou des combinaisons de celles-ci.

9. Matériau d'isolation thermique selon la revendication 1, dans lequel le matériau inorganique creux comprend des microsphères de verre.

10. Matériau d'isolation thermique selon la revendication 1, dans lequel le matériau d'isolation thermique se présente sous forme de coulis.

11. Matériau d'isolation thermique selon l'une quelconque des revendications précédentes, le matériau comprenant ;
- 5-63 % en poids de cendres volantes,
- 1-50 % en poids de kaolin,
- 1-30 % en poids de particules inorganiques creuses
- 6-56 % en poids de silicate de sodium
- 1-20 % en poids de NaOH et
- 5-55 % en poids d'eau,
dans lequel les pourcentages en poids sont basés sur le poids total du matériau d'isolation thermique.

12. Matériau d'isolation thermique selon l'une quelconque des revendications précédentes, le matériau comprenant ;
- 18-48 % en poids de cendres volantes,
- 1-40 % en poids de kaolin
- 1-20 % en poids de particules inorganiques creuses
- 10-50 % en poids de silicate de sodium
- 1-20 % en poids de NaOH et
- 5-40 % en poids d'eau,
dans lequel les pourcentages en poids sont basés sur le poids total du matériau d'isolation thermique.

13. Matériau d'isolation thermique selon l'une quelconque des revendications précédentes, le matériau comprenant ;
- 18-23 % en poids de cendres volantes,
- 8-12 % en poids de métakaolin
- 9-12 % en poids de particules inorganiques creuses
- 42-46 % en poids de silicate de sodium
- 2-5 % en poids de NaOH et
- 10-15 % en poids d'eau,
dans lequel les pourcentages en poids sont basés sur le poids total du matériau d'isolation thermique.

14. Utilisation d'un matériau d'isolation thermique selon la revendication 10 destiné à être appliqué par pulvérisation sur une surface.

15. Utilisation d'un matériau d'isolation thermique selon les revendications 1 à 13 destiné à recouvrir l'équipement industriel, à appliquer sur des surfaces métalliques telles que des fours, des dispositif de chauffage, un incinérateur, des tuyaux chauds dans les industries et notamment dans les raffineries.
